# EUROPEAN PATENT APPLICATION

(11) **EP 4 401 220 A1**
(43) Date of publication of application: **17.07.2024**
(21) Application number: 23831938.8
(22) Date of filing: 29.06.2023
(51) Int. Cl.: H01M 50/242, H01M 50/236, H01M 50/204

(54) **BATTERY PACK**

(30) Priority: 01.07.2022 KR 20220081453
(71) Applicant: LG Energy Solution, Ltd., Seoul 07335 (KR)
(72) Inventor: YANG, Chang Hyeon, Daejeon 34122 (KR); LEE, Hyoung Suk, Daejeon 34122 (KR); SHIN, Ju Hwan, Daejeon 34122 (KR); JEON, Bo Ra, Daejeon 34122 (KR); KIM, Ki Young, Daejeon 34122 (KR)
(74) Representative: Plasseraud IP
(86) International application number: PCT/KR2023/009176
(87) International publication number: WO 2024/005580

(57) **Abstract**

The present technology relates to a battery pack. More specifically, the battery pack of the present technology for accommodating battery modules, the pack case to configure a base plate supporting a lower part of the battery modules, and sidewalls coupled to along the edge of the base plate and side walls coupled to the base plate to separate a space in which the battery modules are accommodated; top cover coupled the pack case to cover a battery module accommodated in the pack case; and a reinforcement beam inserted into at least one of the side walls and separation walls, wherein the reinforcement beam includes at least two side-by-side reinforcement members in the form of columns having a plurality of ribs protruding and formed, and provides a battery pack.

## Description

### [Technical Field]

The present invention relates to a battery pack, and the battery pack of the present invention is characterized in that the side strength of the battery pack is improved by using a reinforcement beam inserted into the side wall of the pack case having a hollow shape.

This application claims the benefit of priority from Korean Patent Application No. 10-2022-0081453 filed on July 1, 2022, and the entire contents of the Korean patent application are incorporated herein by reference.

### [Background Art]

An operating voltage of the unit secondary battery cell is about 2.5V to 4.2V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the charge/discharge capacity.

For example, when a plurality of battery cells is connected in series or in parallel to configure a battery pack, it is common to configure a battery module composed of a plurality of battery cells first.

A conventional battery pack comprises a pack case in which battery modules are accommodated, and a top cover coupled to the pack case to cover the battery modules accommodated in the pack case.

The pack case may be formed with an inner space surrounded by sidewalls, wherein the plurality of battery modules is separately accommodated in a section formed by a plurality of separation walls.

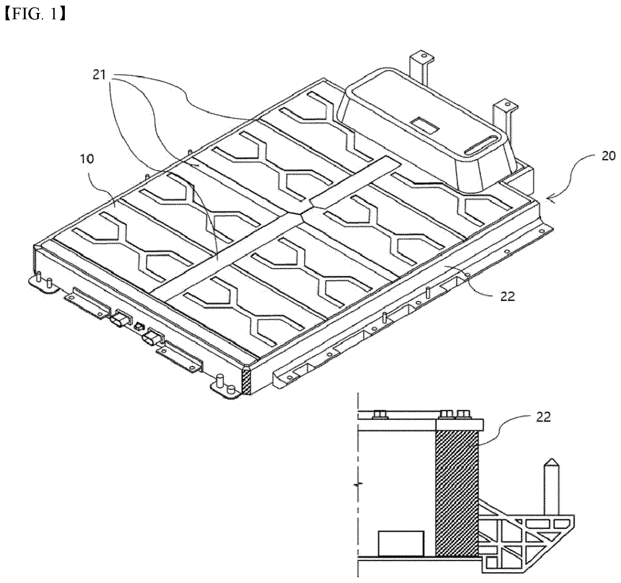

FIG. 1 illustrates a pack case contained in a conventional battery pack and a battery module accommodated in the pack case. A plurality of battery modules are separated and accommodated by a plurality of side walls, and surrounded and protected by a sidewall located at an outermost edge of the pack case.

Meanwhile, the battery pack may be protected from external impact by the side walls. Recently, sidewall structure with an excellent strength is required to minimize the damage of the battery module.

However, changing the shape of the pack case every time to improve the strength according to the various needs of customers is a factor that decreases the manufacturing efficiency of battery packs.

In addition, increasing the thickness of the sidewalls to improve the strength also reduces the energy efficiency of the battery.

Therefore, there is a demand for a new method to improve the side strength of the pack case without reducing the energy efficiency of the battery and minimizing structural changes according to the needs of various customers.

### [Related Art Document]

Korean Laid-open Patent No. 10-2021-0134165

### [Disclosure]

### [Technical Problem]

Therefore, the present invention is directed to providing to improve the side strength of the battery pack.

In addition, an object of the present invention to provide a method for selectively improving the strength of certain parts of a battery pack.

Also, an object of the present invention to provide a reinforcement structure applicable to battery packs of various structures.

Other objects and advantages of the present invention will be understood from the following description and will become apparent from the embodiments of the present invention. It will also be easily seen that the objects and advantages of the present invention may be realized by the means and combinations thereof disclosed in the claims of the patent.

### [Technical Solution]

According to the present invention, a battery pack for accommodating battery modules, the pack case to configure a base plate supporting a lower part of the battery modules, and sidewalls coupled to along the edge of the base plate, and side walls coupled to the base plate to separate a space in which the battery modules are accommodated; top cover coupled the pack case to cover a battery module accommodated in the pack case; and a reinforcement beam inserted into at least one of the side walls and separation walls, wherein the reinforcement beam includes at least two side-by-side reinforcement members in the form of columns having a plurality of ribs protruding and formed, and provides a battery pack.

At least one of the sidewalls and separation walls includes a hollow therein, and the reinforcement beam may be inserted into the hollow.

The hollow is extended and formed along a length direction of the pack case, and the reinforcement beam may be inserted into the hollow such that the length direction of the reinforcement beam and the length direction of the pack case are horizontal.

The reinforcement beam may be inserted so that each end contacts an inner surface of the hollow to support the hollow structure.

The reinforcement beam may include a plurality of reinforcement members engaged in only one direction.

The ends of the reinforcement members may have a round form.

The reinforcement member may include: a first reinforcement part having an arch form in cross-section; and a second reinforcement part formed to have a form symmetrical to the first reinforcement part, wherein an end of the first reinforcement part and an end of the second reinforcement part adjacent to the end of the first reinforcement part may form support surface in an arch form.

A separation length between two ends of the first reinforcement part may be longer than a separation length between an end of the first reinforcement part and an end of a second reinforcement part adjacent to the end of the first reinforcement.

The reinforcement beam may be formed wherein two ends of the first reinforcement part of any one reinforcement member engage both ends of the second reinforcement part of the other reinforcement member.

The reinforcement beam may include a hollow extended and formed between the first reinforcement part of any one reinforcement member and the second reinforcement part of the other one reinforcement member extended and formed along a length direction of the reinforcement beam.

The reinforcement beam may further include an auxiliary reinforcement member of an arch form that is coupled to both ends of the first reinforcement member or the second reinforcement member at a reinforcement member located at the outermost edge.

The reinforcement beam may further include a hollow extended and formed between the outermost reinforcement member and the auxiliary reinforcement member along the length of the reinforcement beam.

The reinforcement beam may include a hollow extended and formed between the pair of reinforcement members engaged along a length direction of the reinforcement beam.

The reinforcement beam may include at least one hollow formed and extended therein along the length of the reinforcement beam.

### [Advantageous Effects]

According to the present invention, the side strength of the battery pack can be improved while minimizing the decrease of energy efficiency.

According to the present invention, the strength of certain parts of the battery pack can be selectively improved.

According to the present invention, the strength of battery packs of various structures can be improved by using reinforcement structures having specific patterns.

### [Brief Description of the Drawings]

FIG. 1 is a perspective view of a conventional battery pack.
FIG. 2 is a perspective view of a battery pack according to a first embodiment of the present invention.
FIG. 3 is a front view of the battery pack of FIG. 2.
FIG. 4 is an enlarged view of a part of the side frame of FIG. 3.
FIG. 5 is a cross-sectional and perspective view of a reinforcing beam included in the battery pack according to a first embodiment of the present invention.
FIG. 6 is a cross-sectional view of a reinforcement member and a cross-sectional view of a reinforcement beam.
FIG. 7 is a cross-sectional and perspective view of a reinforcement beam included in a battery pack according to a second embodiment of the present invention.
FIG. 8 is a cross-sectional and perspective view of a reinforcement beam included in a battery pack according to a third embodiment of the present invention.
FIG. 9 is a cross-sectional and perspective view of a reinforcement beam included in a battery pack according to a fourth embodiment of the present invention.
FIG. 10 shows different types of reinforcement beams inserted into the side frame of the present invention.

### [Detailed Description of the Preferred Embodiments]

Hereinafter, the present invention will be described in detail with reference to the drawings. Prior to this, terms and words used in the present specification and claims should not be construed as limited to general or dictionary terms and should be interpreted with the meaning and concept in accordance with the technical idea of the present invention based on the principle that the inventors have appropriately defined the concepts of terms in order to explain the invention in the best way.

Accordingly, it is to be understood that the embodiments described herein and the configurations illustrated in the drawings are only the most preferred embodiments of the invention and do not represent all of the technical ideas of the invention, and that there may be various equivalents and modifications that may be substituted for them at the time of filing.

In addition, in describing the present invention, specific descriptions of related prior art configurations or features are omitted where it is deemed that such descriptions would obscure the essence of the invention.

Since the embodiments of the present invention are provided to illustrate the invention more fully to those of ordinary skill in the art, the shapes and sizes of the components in the drawings may be exaggerated, omitted, or shown schematically for clarity. Accordingly, the dimensions or proportions of each component are not necessarily indicative of actual dimensions or proportions.

The present invention relates to a battery pack 1000, characterized in that the battery pack 1000 uses a reinforcement beam 300 that is inserted into a side wall 230 of a pack case having a hollow shape to improve the side strength of the battery pack 1000.

### (first embodiment)

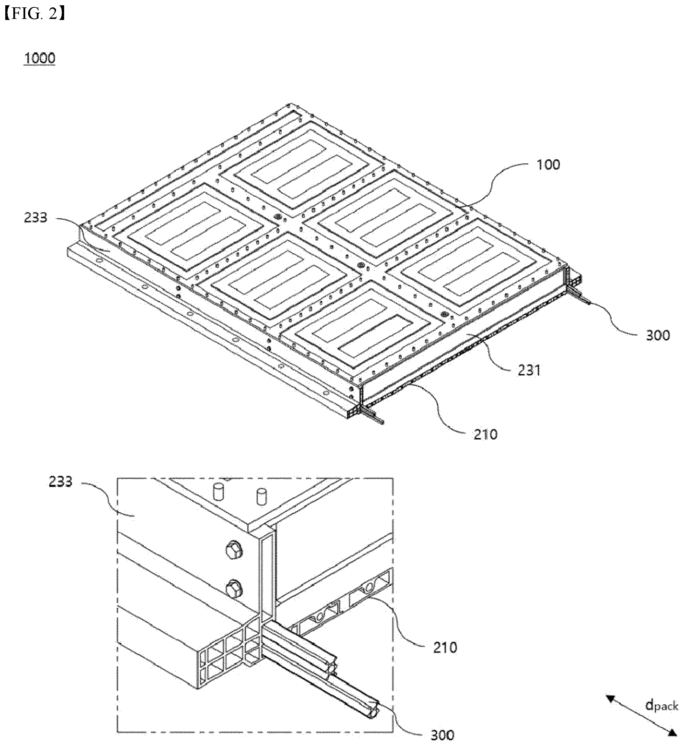

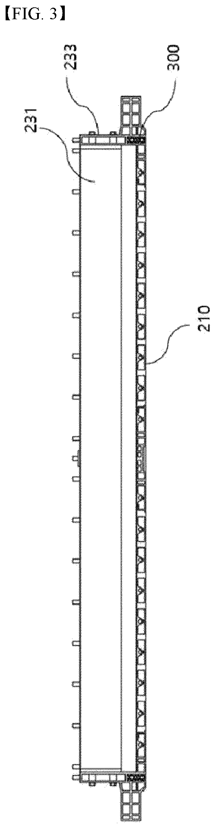

FIG. 2 is a perspective view of a battery pack according to a first embodiment of the present invention, and FIG. 3 is a front view of the battery pack of FIG. 2.

The battery pack 1000 of the present invention includes a pack case accommodating a battery module as shown in FIG. 2, a top cover 100 coupled to the pack case to cover the top of the accommodated battery module, and a reinforcement beam 300 inserted into the pack case to support the sides of the pack case.

The pack case as shown in FIG. 2 and FIG.3 includes a base plate 210, seperation wall, and side wall 230.

The base plate 210 corresponds to the bottom part of the pack case and serves to support the lower part of the battery module accommodated in the pack case.

The separation wall is coupled to the base plate 210 to separate the space in which the battery module is accommodated on the base plate 210.

More specifically, the separation wall includes a main separation wall, which separates the space of the pack case into largely two spaces across the center of the base plate 210, and a plurality of auxiliary separation walls, which are coupled to the base plate 210 so as to separate the space formed by the main separation wall into a plurality of spaces along the length direction (d_{pack}) of the pack case.

The auxiliary separation wall is coupled to the main separation wall at an end of one side, and the plurality of auxiliary separation walls coupled to one side of the main separation wall are spaced apart at predetermined intervals along the main separation wall.

The side wall 230 corresponds to the side part of the pack case and serves to protect and support the opened side of the battery module accommodated in the pack case.

The side wall 230 includes a hollow and are coupled along the edge of the base plate 210.

The hollow is extended and formed along the length direction (d_{pack}) of the pack case.

More specifically, the side wall 230 includes a side frame 233 that is coupled to the base plate 210 on both sides of the pack case, a front frame 231 that is coupled to the base plate 210 at the front of the pack case, and a rear frame 232 that is coupled to the base plate 210 at the rear of the pack case.

On the inner side of the side frame 233 is coupled an end of each auxiliary separation wall coupled to one side of the main separation wall opposite to the side frame 233.

The inner side of the front frame 231 and the rear frame 232 are coupled to both ends of the main separation wall, respectively.

Since the upper cover 100 corresponds to the known art, a detailed description thereof is omitted herein.

The reinforcement beam 300 is preferably inserted into the sidewall 230 included in the pack case, and more specifically into the side frame 233 as shown in FIGS. 2 and 3.

The reinforcement beam 300 is preferably inserted into the hollow of the side frame 233 to serve to improve the side support of the battery pack 1000.

The reinforcement beam 300 is inserted into the hollow so that the length direction (d_{beam}) of the reinforcement beam 300 and the length direction (d_{pack}) of the pack case are horizontal.

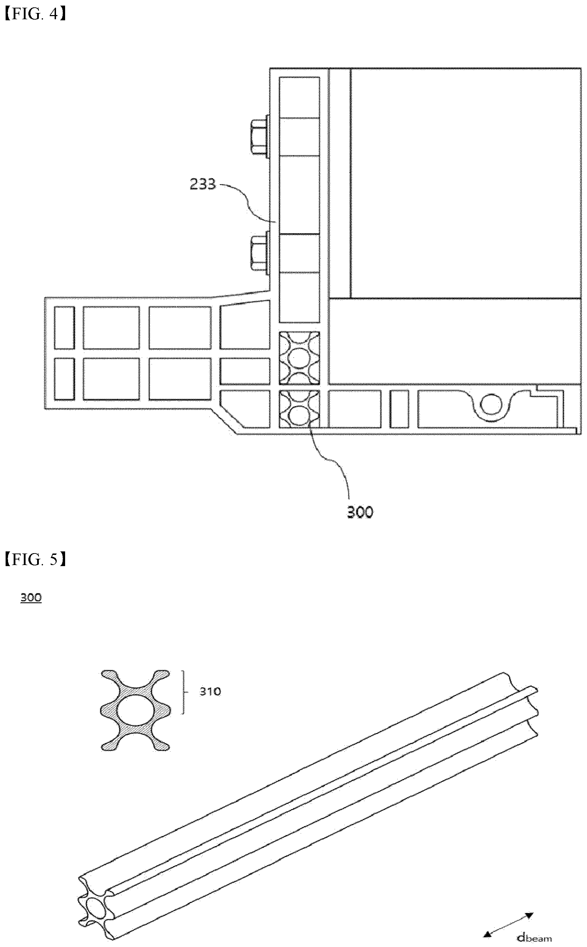

FIG. 4 is an enlarged view of a part of the side frame of FIG. 3, and the side frame 233 may include a plurality of hollows therein, as shown in FIG. 4, and the reinforcement beam 300 may be inserted into at least one of the plurality of hollows to increase the strength of the side frame 233. In this case, the reinforcement beam 300 may be selectively inserted into a portion of the hollow of the side frame 233 that needs to be reinforced.

FIG. 5 is a cross-sectional and perspective view of a reinforcing beam included in the battery pack according to a first embodiment of the present invention.

The reinforcement beam 300 of the present invention is characterized in that it includes at least two reinforcement members 310 of columnar shape engaged together in the thickness direction.

In other words, the reinforcement beam 300 includes a plurality of reinforcement members 310 engaged together in only one direction.

The reinforcement beam 300, as shown in FIG. 5, included in the battery pack 1000 according to the first embodiment, comprises two reinforcement members 310 contacted side by side. In this case, the reinforcement beam 300 may be a combination of two reinforcement members 310, or it may be manufactured as a single piece.

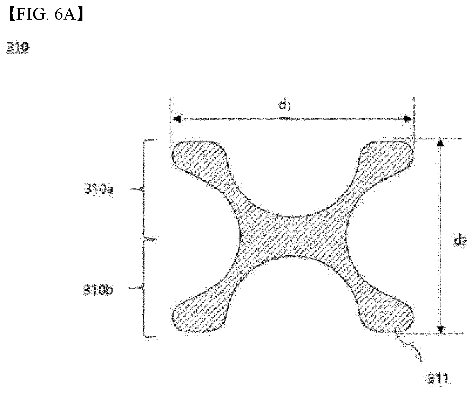

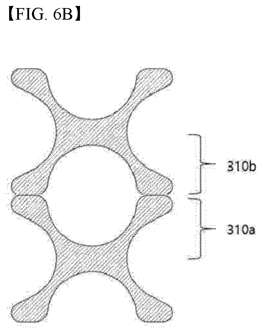

FIG. 6 is a cross-sectional view of a reinforcement member and a cross-sectional view of a reinforcement beam.

The reinforcement member 310 has the form of a column having a plurality of ribs 311 projecting therefrom, as shown in FIG. 6(a). Preferably the reinforcement member 310 includes four ribs 311 protruding diagonally from the sides, and more preferably the cross-section of the reinforcement member 310 is given an X-shape by each of the ribs 311.

Reinforcement members 310 having the above shapes may better resist side impacts transferred along the length direction (d_{beam}) of the reinforcement beam 300. Furthermore, a reinforcement beam 300 having a structure with a plurality of reinforcement members 310 of the same structure as described above may have improved resistance to twisting as well as side strength.

In this case, it is preferred that all four ribs 311 comprising the one reinforcement member 310 have the same length.

It is also preferred that the ends of the four diagonally protruding ribs 311 each have a rounded shape, and that the cross-sectional thickness increases toward the ends.

The reinforcement beam 300, as shown in FIG. 3 supports the hollow structure of the side frame 233 by being inserted so that each side end contacts an inner surface of the hollow.

The reinforcement member 310 includes a first reinforcement member 310a having two ribs 311 in the form of an arch form and a second reinforcement member 310b having two ribs 311 and formed to have a shape symmetrical to the first reinforcement member 310a. in other words, the reinforcement member 310 includes a first reinforcement member 310a and a second reinforcement member 310b that are symmetrically engaged to each other.

The ribs 311 formed on one side of the first reinforcement 310a and the ribs 311 of the second reinforcement 310b adjacent to the ribs 311 of said first reinforcement 310a form an arch form support side.

The separation length between the two ends of the first reinforcement member 310a or the second reinforcement member 310b is longer than the separation length between the end of the first reinforcement member 310a and the end of the second reinforcement member 310b adjacent to the end of the first reinforcement member 310a. In other words, the reinforcement member 310, as shown in FIG. 6(a) preferably has a length d1 of a transverse width longer than a length d2 of a length of a longitudinal width. Because of this shape of the reinforcement member 310, the reinforcement beam 300 is better able to resist the physical forces transferred to the sides.

FIG. 6(b) is a cross-sectional view of a reinforcement beam 300 formed by coupled to two reinforcement members 310.

The reinforcement beam 300 of the present invention, as shown in FIG. 6(b) is formed by two ends of a first reinforcement part 310a of one reinforcement member 310 contacting two ends of a second reinforcement 310b of the other reinforcement member 310. The reinforcement beam 300 may be a combination of two reinforcement members 31, or may be manufactured in the shape of a combination of two reinforcement members 310.

The reinforcement beam 300 includes a hollow formed between a first reinforcement part 310a of one of the reinforcement members 310 and a second reinforcement part 310b of the other reinforcement member 310 extending along a length direction (dbeam) of the reinforcement beam 300. Due to the hollow structure as described above, the reinforcement beam 300 of the present invention can improve the strength of the side frame 233 while minimizing the amount of weight increase. Therefore, the energy efficiency of the battery pack 1000 can be prevented from being decreased.

The reinforcement beam 300 of the present invention may include at least one or more hollows.

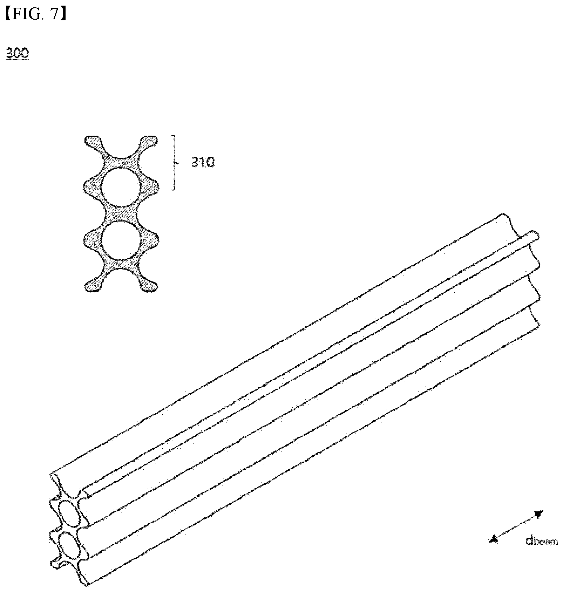

Hereinafter referring to FIG. 7 to FIG. 10, a reinforcement beam 300 having a plurality of hollows will be described in each of the embodiments.

### (second embodiment)

In order to insert the reinforcement beam 300 into various sized hollows included in the side frame 233, it is possible to vary the shape of the reinforcement beam 300 by adjusting the number or size of the reinforcement members 310 according to the size or shape of the hollows.

FIG. 7 is a cross-sectional and perspective view of a reinforcement beam included in a battery pack according to a second embodiment of the present invention.

The reinforcement beam 300 according to the second embodiment is characterized in that the three reinforcement members 310 contacted in one direction.

Because of the above structure, the reinforcement beam 300 according to the second embodiment can improve the side strength of the side frame 233 more than the reinforcement beam 300 according to the first embodiment.

The reinforcement beam 300, as shown in FIG. 7 is formed with two hollows along the direction in which the reinforcement members 310 are coupled.

### (third embodiment)

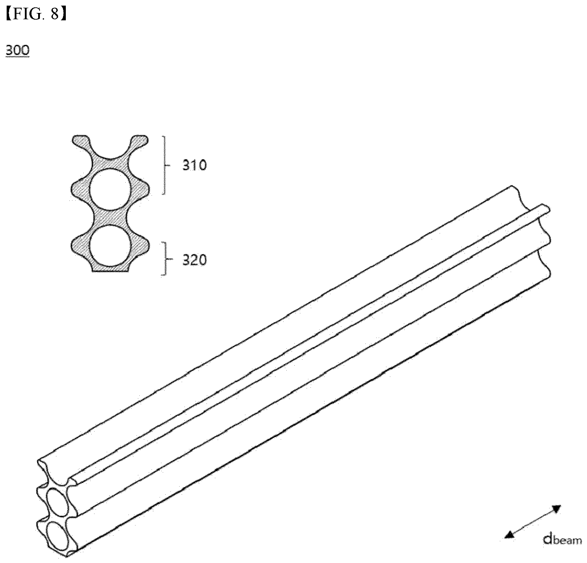

FIG. 8 is a cross-sectional and perspective view of a reinforcement beam included in a battery pack according to a third embodiment of the present invention.

The reinforcement beam 300 according to the third embodiment further includes an auxiliary reinforcement member 320 in the arch form that is coupled to the reinforcement member 310 located at the outermost angle.

The auxiliary reinforcement members 320 are auxiliary configurations added to insert the reinforcement beam 300 into variously shaped hollows included in the side frame 233.

The reinforcement beam 300 according to a third embodiment, as shown in FIG. 8 includes two reinforcement members 310 contacted in one direction, and an auxiliary reinforcement member 320 in the arch form coupled to both ends of either the first reinforcement member 310a or the second reinforcement member 310b of either reinforcement member 310.

The auxiliary reinforcement member 320 preferably has the same shape as the first reinforcement member 310a or the second reinforcement member 310b included in the reinforcement member 310.

Thus, the reinforcement beam 300 according to the above third embodiment includes a hollow formed between any one of the reinforcement members 310 and the auxiliary reinforcement members 320 extending along the length direction (d_{beam}) of the reinforcement beam 300.

### (fourth embodiment)

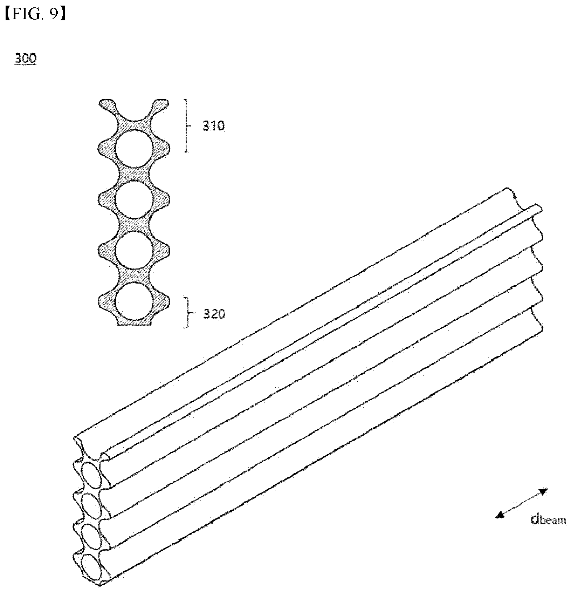

FIG. 9 is a cross-sectional and perspective view of a reinforcement beam included in a battery pack according to a fourth embodiment of the present invention.

The reinforcement beam 300 according to the fourth embodiment further includes an auxiliary reinforcement member 320 in an arch form that is coupled to the reinforcement member 310 located at the outermost angle.

The auxiliary reinforcement members 320 are auxiliary configurations added to insert the reinforcement beam 300 into variously shaped hollows included in the side frame 233.

The reinforcement beam 300 according to a fourth embodiment, as illustrated in FIG. 9, includes four reinforcement members 310 contacted in a single direction, and an arch shaped auxiliary reinforcement member 320 coupled to both ends of a first reinforcement member 310a or second reinforcement member 310b of any of the reinforcement members 310 located at the outermost angle of the reinforcement members 310.

The auxiliary reinforcement member 320 preferably has the same shape as the first reinforcement member 310a or second reinforcement member 310b included in the reinforcement member 310.

Therefore, the reinforcement beam 300 according to the above fourth embodiment includes a hollow formed between at least one of the contacted reinforcement members 310 and the auxiliary reinforcement member 320 extending along the length direction (d_{beam}) of the reinforcement beam 300.

The reinforcement beam 300 included in the battery pack 1000 of the present invention is not limited to the first embodiment to the fourth embodiment, and various forms of the reinforcement beam 300 may be used by adjusting the amount of coupling of the plurality of members as needed.

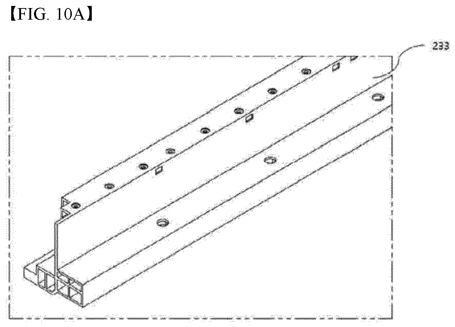

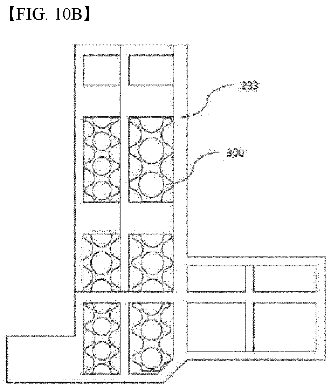

FIG. 10 shows different types of reinforcement beams inserted into the side frame of the present invention. More specifically, FIG. 10(a) is a perspective view of the side frame 233 of the present invention, and FIG. 10(b) is a cross-sectional view of the side frame 233 of FIG. 10(a).

Referring to FIG. 10, in order to insert the reinforcement beam 300 into the various sized hollows included in the side frame 233 of the present invention, various reinforcement beams are inserted by adjusting the number or size of the reinforcement members 310 according to the size or shape of the hollow of the side frame 233.

In other words, the present invention modifies the shape of the reinforcement beam 300 by adjusting the number or size of the reinforcement members 310 according to the size or shape of the hollow, or by combining the auxiliary reinforcement members 320, in order to insert the reinforcement beam 300 into various sizes of hollow included in the side frame 233.

The present disclosure has been described in detail. However, this does not limit the present invention to the specific embodiments, and all modifications, equivalents, or substitutes included in the spirit and technical scope of the present invention should be understood as belonging to the present invention. It should be understood that the detailed description and specific examples, while indicating preferred embodiments of the disclosure, are given by way of illustration only, since various changes and modifications within the scope of the disclosure will become apparent to those skilled in the art from this detailed description.

### [Description of reference numerals]

10: (related art) battery module
20: (related art) pack case
21: (related art) separation wall
22: (related art) side wall
1000: battery pack
100: top cover
210: base plate
230: side wall
231: front frame
232: rear frame
233: side frame
300: reinforcement beam
310: reinforcement member
310a: first reinforcement part
310b: second reinforcement part
311: rib
320: auxiliary reinforcement member
d1: vertical length
d2: horizontal length
d_{pack}: length direction of pack case
d_{beam}: length direction of reinforcement beam

## Claims

1. A battery pack for accommodating battery modules, comprising: the pack case to configure a base plate supporting a lower part of the battery modules, and sidewalls coupled to along the edge of the base plate, and side walls coupled to the base plate to separate a space in which the battery modules are accommodated; top cover coupled the pack case to cover a battery module accommodated in the pack case; and a reinforcement beam inserted into at least one of the side walls and separation walls, wherein the reinforcement beam includes at least two side-by-side reinforcement members in the form of columns having a plurality of ribs protruding and formed, and provides a battery pack.

2. The battery pack of claim 1, wherein at least one of the sidewalls and separation walls comprises a hollow therein, and the reinforcement beam may be inserted into the hollow.

3. The battery pack of claim 2, wherein the hollow is extended and formed along a length direction of the pack case, and the reinforcement beam may be inserted into the hollow such that the length direction of the reinforcement beam and the length direction of the pack case are horizontal.

4. The battery pack of claim 2, wherein the reinforcement beam may be inserted so that each end contacts an inner surface of the hollow to support the hollow structure.

5. The battery pack of claim 1, wherein the reinforcement beam may include a plurality of reinforcement members engaged in only one direction.

6. The battery pack of claim 1, wherein the reinforcement member, comprising: a first reinforcement part having an arch form in cross-section; and a second reinforcement part formed to have a form symmetrical to the first reinforcement part.

7. The battery pack of claim 6, wherein a separation length between two ends of the first reinforcement part may be longer than a separation length between an end of the first reinforcement part and an end of a second reinforcement part adjacent to the end of the first reinforcement.

8. The battery pack of claim 6, wherein the reinforcement beam may be formed wherein two ends of the first reinforcement part of any one reinforcement member engage both ends of the second reinforcement part of the other reinforcement member.

9. The battery pack of claim 7, wherein the reinforcement beam comprises a hollow extended and formed between the first reinforcement part of any one reinforcement member and the second reinforcement part of the other one reinforcement member extended and formed along a length direction of the reinforcement beam.

10. The battery pack of claim 6, wherein the reinforcement beam further comprises an auxiliary reinforcement member of an arch form that is coupled to both ends of the first reinforcement member or the second reinforcement member at a reinforcement member located at the outermost edge.

11. The battery pack of claim 10, wherein the reinforcement beam may further include a hollow extended and formed between the outermost reinforcement member and the auxiliary reinforcement member along the length of the reinforcement beam.

12. The battery pack of claim 1, wherein the reinforcement beam may include a hollow extended and formed between the pair of reinforcement members engaged along a length direction of the reinforcement beam.

13. The battery pack of claim 1, wherein the reinforcement beam may include at least one hollow formed and extended therein along the length of the reinforcement beam.
